# EUROPEAN PATENT APPLICATION

(11) **EP 0 967 556 A2**
(43) Date of publication of application: **29.12.1999**
(21) Application number: 99102527.1
(22) Date of filing: 10.02.1999
(51) Int. Cl.: G06F 17/30

(54) **Flat image delivery server**

(30) Priority: 26.06.1998 US 105519
(71) Applicant: Hewlett-Packard Company, Palo Alto, California 94304 (US)
(72) Inventor: Habu, Masayoshi, San Jose, Ca 95129 (US)
(74) Representative: Schoppe, Fritz, Dipl.-Ing.

(57) **Abstract**

The inventive flat image delivery (FID) server (11) manages image conversion, paricularly the fetching of the image tiles and the stitching of the image tiles into the JPEG images. The FID server is part from the web server (12), and thus reduces the processing load of the web server. The image conversion of the FID is invoked by a static URL request which allows the resulting JPEG image to be cached by proxy servers (14). The FID server operates in between a web server and a proxy server. The conversion command includes an image filename, a resolution size requirement, and the image region of interest. The inventive FID server can be configured to operate with any imaging protocol or tile based server.

## Description

### TECHNICAL FIELD OF THE INVENTION

This application relates in general to image processing and in specific to a delivery server for handling images requests to reduce the processing load of a web server.

### BACKGROUND OF THE INVENTION

With the advancement of desktop computer systems, digital images have become a generic data type. However, the images comprise large amounts of data. An international standard for color image compression known as JPEG emerged to fulfill the need of efficient storage and transmission of digital continuous tone images. JPEG defines a standard algorithm for image compression that represents images with less data in order to save storage costs as well as transmission time and costs. The JPEG format is discussed in JPEG Still Image Data Compression Standard, by W.B. Pennebaker and J.L. Mitchell, Van Nostrand Reinhold, New York, New York, 1993, which is herein incorporated by reference. JPEG has gained great popularity because it allows the interchange of images between diverse applications. However, applications normally exchange JPEG data streams as single resolution images regardless of the target resolutions. For example, typical displays have resolutions of about 72 dots per inch (dpi), whereas typical printers can handle 300 - 1200 dpi or higher. Consequently, displaying a print resolution JPEG image is very inefficient. Furthermore, printing a display resolution JPEG image yields a very low quality output.

Another problem with JPEG is that accessing a local region of the image requires receiving and decoding of the whole image. For example, a satellite image is usually a very large image, and typically users only desire to view a scaled down portion of the image. Thus, the entire satellite image must be retrieved and then decompressed before any portion of the image can be viewed. Therefore, the entire image must be transferred over a network, even if only a portion of the image is desired. This is highly undesirable in terms of transmission time and costs.

A prior art alternative to JPEG is a multi-resolution format such as FlashPix, which is an image file format that supports multi-resolution images and provides fast local region access. FlashPix is discussed in Eastman Kodak Company, FlashPix Implementation Guide, version 1.0, 1996, which is herein incorporated by reference. The FlashPix files can contain multiple resolutions in the same storage, meaning that it stores different resolutions of the image, from a small version to a large version of the image in the same file. For example, a file may contain the original image, a ½ scaled down version, ¼ scaled down version, and a ⅛ scaled down version. When a user requests a particular sized version or a particular resolution version, FlashPix will send the closest stored version to the request. FlashPix also provides fast access to file resident image data by organizing the image data as tiles. The image is divided into different tiles, which can be individually accessed. Thus, a user may view a portion of the image without having to retrieve the entire image.

However, a problem has arisen from the use of FlashPix when used in a server and client environment. Typically, in such as environment, e.g. the World Wide Web, the client requests tiles of an image based on the required image resolution and the region of interest using an imaging protocol (IP), which allows the transfer of high resolution digital images over the Internet. The problem arises when the client or user does not have FlashPix installed in their system. Thus, the client is unable to receive tile based images. One solution is to have the client install a software plug-in, which would allow the receipt of tile based images. However, this requires action by the client or user, and thus, can not be relied upon as being correctly performed.

Another solution is to reform the tiles into a JPEG image, which would be readable by the client. Some IPs have a conversion command that forms a JPEG image from several tile images by fitting the tiles together. Thus, the JPEG image would be viewable by the client or user. Note that only the tiles associated with the desired portion of the image are used to form the JPEG image, thus the entire image does not have to be sent to the client. However, the conversion command places high computing load on the web or IP server. Thus, the web server will have to reformat images in addition to handling other requests from other clients or users. Moreover, the resulting JPEG image from the conversion command is not cached by http proxy servers. Thus, duplicate requests for the same images will have to be completely reprocessed by the web server, and this further increases its computing load. This severely limits the scalability of the web or IP server. The image is not cached because the conversion command is typically expressed as a dynamic universal resource locator (URL) request. This means that the URL requests for utilizing the conversion command includes question character (?) or an ampersand character (&). This indicates that the output from the URL is for a specific user, e.g. a search engine request, and is not likely to be repeated by another user. Thus. the results of such a URL requests are not cached. Note that a proxy server usually exists on a fire wall which sits between a public Internet and an internal intranet, and protects the intranet from outside intruders.

Therefore, there is a need in the prior art for a mechanism which reduces the computing load of the web server in reformatting, and produces images that will be maintained in the cache of a proxy server.

### SUMMARY OF THE INVENTION

These and other objects, features and technical advantages are achieved by a system and method which uses a Flat Image Delivery (ED) server to manage image conversion, which performs the tile image fetching and stitching of the tile images into the JPEG images. The ED server is located on a computer system separate from the web server, and thus will reduce the processing load of the web server. The image conversion of the FID is invoked by a static URL request, and thus the resulting JPEG image would be cached by proxy servers. The FID server works as a third tier in the server and client environment, specifically working as a middle agent to retrieve image tiles from the web server and stitch them into a single image to be returned to the client. Since the conversion command is a static URL request, the command does not use the ? or & characters associated with dynamic URL requests. The conversion command includes a FlashPix filename, a resolution size requirement, and the image region of interest. The inventive FID server will operate with any IP or tile based server, so long as the FID server has been configured to understand the particular protocol being used..

Therefore, it is a technical advantage of the present invention to manage image conversion with FID server that is separate from the web servers.

It is another technical advantage of the present invention that the image conversion command used by the FID server is a static URL request, so that the resulting image will be cached by an attached proxy server.

It is a further technical advantage of the present invention that the computation work load of the web server is reduced, and thus the server system can be scaled to handle more client users.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

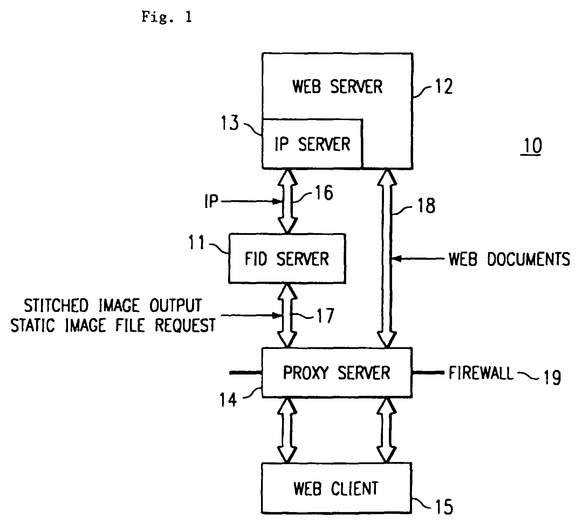

For a more complete understanding of the present invention, and the advantages thereof, reference is now made to the following descriptions taken in conjunction with the accompanying drawings, in which:
THE SOLE FIGURE depicts the inventive FID server in its operating environment.

### DETAILED DESCRIPTION OF THE INVENTION

The FIGURE shows the inventive FID server 11 being used in Internet system 10. The FID server is connected between the web server 12 and proxy server 14. Note that the FID server can also manage requests in an intranet, LAN, or WAN environments. The FID server understands the IP protocol used by the IP server 13. An example of IP protocol is Internet Imaging Protocol, version 1-0, by Hewlett-Packard Company, Live Picture, Inc., and Eastman Kodak Company, 1997, which is herein incorporated by reference. The proxy server 14 is located on the fire wall 19, which protects the intranet from outside intruders. The FID server 11 listens on a pre-defined TCP/IP port such as 8001. A web client 15 requests an image expressed in a static URL that includes an image file name, region of interest, and the desired image size. For example, the request 17 may appear as follows:
http://domain.com:8001/image-name.fpx,0.0,0.0,1.0,1.0,300,200

The request 17 includes the image file name, "image-name.fpx". The region of interest is indicated by four numbers, for example "0.0,0.0,1.0,1.0". The desired image size is indicated by two numbers, for example,"300,200", which details the width pixels and the height pixels, respectively. Note that the numbers, and their placement within the request, are for purposes of illustration only, as different numbers could be used, and their format within the request could be different, so long as the FID server understands the contents of the request. The image file name is then passed to a predefined IP server 13. The interpretation of the file name is left up to the IP server 13. Note that the IP server 13 is the image manager of the web server 12, and in the prior art would handle the tasks of the FID server 11. The four numbers for the region of interest indicate resolution independent, normalized coordinates of upper-left and lower-right points. For example, "0.0,0.0,1.0,1.0" indicates the whole region of the image, and "0.5,0.5,1.0,1.0" represents the lower-right quadrant. Note that since this request does not include the special characters such as ? and &, this is treated as a static file request rather than a dynamic request.

After the FID server 11 has received the request 17 from the client 15, the FID server 11 communicates with the IP server 13 and receives basic information about the requested image, such as the number of resolution layers, maximum image dimension, and other image attributes, e.g. color. Based on this information, particularly the region of interest and the desired image size, the FID server 11 requests appropriate image tiles 16 to the IP server 11. Once the FID server 11 receives the proper tiles, the FID server decompresses the tiles, stitches them together to form the image, and then recompresses them back into a single JPEG image. The FID server may also either scale up or scale down the tiled image depending on the requested size and resolution. The scaling would be performed after the image has been stitched together. Note that the image is recompressed to save transmission costs when the image is sent over the Internet. The recompressed image is then sent on to the client 15, as the response to the request. Note that compression formats other than JPEG could be used in the recompression of the image.

The proxy server 14 would retain a copy of the scaled, compressed, output image in its cache. Thus, if a subsequent URL request is received that has the same request information, then the proxy would send a copy of the cached image to the requesting client.

Another URL request may include an explicit resolution level and request the entire image. For example, the following states the same image file name with the explicit resolution layer 3 to be returned. The specific resolution layer determines the returned image size.
http://domain.com:8001/image-name.fpx,3

Note that the FID server 11 communicates with the IP server using IP protocol on top of HTTP. Furthermore, the FID server can also keep a memory cache of compressed tiles so that it can reduce network load to the IP server. Since, the FID server uses a particular form of IP, only IP or web servers that are compliant with the particular form of IP will operate with the FID server. Note the that clients 15 do not have to understand IP protocol, or tiled images, as the conversion mechanism is located on the web server side of the Internet.

Although the present invention and its advantages have been described in detail, it should be understood that various changes, substitutions and alterations can be made herein without departing from the spirit and scope of the invention as defined by the appended claims.

## Claims

1. An image server (11) for managing image requests from at least one client (15), wherein the images are stored in a storage server (12), the image server comprising:
means for receiving (17) an image request from the one client;
means for retrieving (16) the image from the storage server;
means for reformatting the image into an output image with a format useable by the one client; and
means for sending (17) the output image to the one client.

2. The image server of claim 1, wherein:
the request is a static URL request.

3. The image server of claim 2, wherein:
the static URL request includes an image file name of the image, information indicating a desired portion of the image, and information indicating a desired image size.

4. The image server of claim 2, wherein:
the output image is cacheable by a proxy server (14) which resides between the image server (11) and the one client (15).

5. The image server of claim 1, wherein the means for retrieving the image comprises:
means for disassembling the request into an image address and at least one desired attribute;
means for retrieving information about the image from the storage server (12) based upon the address; and
means for requesting the image from the storage server based upon the retrieved information.

6. The image server of claim 5, wherein the one desired attribute includes a portion of the image, and the image is stored in the storage server (12) in a tile based format, the means for retrieving the image further comprises:
means for determining which tiles form the portion of the image;
wherein the means for requesting the image only requests the determined tiles, and the means for retrieving the image only retrieves the determined tiles for the image.

7. The image server of claim 6, wherein the means for reformatting comprises:
means for stitching the determined tiles together to form the output image.

8. The image server of claim 7, further comprising:
means for compressing the output image prior to operation of the means for sending.

9. A method for managing image requests from at least one client (15), via an image server (11), wherein the images are stored in a storage server (12), the method comprising the steps of:
receiving an image request from the one client;
retrieving the image from the storage server;
reformatting the image into an output image with a format useable by the one client, via the image server; and
sending the output image to the one client.

10. The method of claim 9, wherein the request is a static URL request, the method further comprising the step of:
caching the output image in a proxy server (14) which resides between the image server (11) and the one client (15).
